# EUROPEAN PATENT APPLICATION

(11) **EP 3 038 004 A1**
(43) Date of publication of application: **29.06.2016**
(21) Application number: 14837997.7
(22) Date of filing: 11.08.2014
(51) Int. Cl.: G06F 21/52, G06F 11/28

(54) **METHOD FOR PROVIDING SECURITY FOR COMMON INTERMEDIATE LANGUAGE-BASED PROGRAM**

(30) Priority: 22.08.2013 KR 20130099950
(71) Applicant: Inka Entworks, Inc., Seoul 140-872 (KR)
(72) Inventor: NAM, Jae Min, Seoul 122-900 (KR); PARK, Jung Geun, Gyeonggi-do 463-967 (KR); HONG, Jun Ho, Namyangju-si Gyeonggi-do 475-952 (KR); OH, Jun Seok, Seoul 140-903 (KR); KIM, Jung Soo, Seoul 131-813 (KR)
(74) Representative: Coralis Harle
(86) International application number: PCT/KR2014/007445
(87) International publication number: WO 2015/026091

(57) **Abstract**

Disclosed is a method for providing security of a program made in a script language. In a method for providing security for a common intermediate language-based program, which provides security for a user DLL used in a platform supporting an application made of common intermediate language code and a plug-in made of native code, the method comprises: a specific function call step of calling a specific function within an application which calls a specific module in a security logic DLL including one or more modules while an application is loaded into a main memory and executed; a DLL request step of requesting the security logic DLL from a security module plug-in in which the security logic DLL is encrypted and stored; a DLL generation step of generating the security logic DLL by decrypting the encrypted DLL in the security module plug-in; a step of transmitting the security logic DLL to the specific function within the application; and a DLL module call step of calling the specific module included in the security logic DLL.

## Description

### BACKGROUND OF THE INVENTION

### Field of the Invention

The present invention relates to a method for providing security for a common intermediate language-based program.

### Description of the Related Art

It is pointed out that what is described below simply provides background information related with the present embodiments but does not constitute prior art.

The applications should be developed individually to fit the hardware or operating system in spite of performing the same work. In other words, the applications can execute game programs in a variety of environments such as PC, Mac, web browser, flash, android phones and iPhones. However, they cannot be developed by reusing the source code of the game programs and have to be developed individually depending on the platform. Thus, the development and maintenance costs of the game programs are increased. If one source code can be used independently of the hardware or operating system, the development and maintenance costs can be significantly reduced. This need has been recently further increased with the advent of smart phones and actually most of the mobile games are being produced by game engines and development tools which use one source code independently of the hardware or operating system. A representative cross-platform game engine is Unity, Havok Vision, COCOS2D and the like. In particular, Unity is a cross-platform game engine which supports C#, Javascript, and Boo of the languages for making game scripts.

However, programs written in a programming language such as C# and Java are not directly converted into a machine language even if compiled but are converted into the Common Intermediate Language (CIL) code wherein the common intermediate language code is not limited to a binary obtained by converting the source code written in C# language and also includes byte code in Java language and the like. In order to execute the common intermediate language code, there needs means to convert the common intermediate language such as .NET Framework, Mono, JVM into a machine language and then execute this machine language.

Nowadays, it is not difficult to analyze the common intermediate language code to restore it to the original source code by a reverse engineering technology. If the source code restored through the reverse engineering is modified, rebuilt and packaged, it will also be distributed to users. In order to make the analysis of the program difficult, the technique for obfuscating the source code of the program or the common intermediate language code can be used but cannot become the fundamental solution since the source code of the applications can be exposed.

Therefore, there needs a security method to prevent the trade secret from being exposed due to the fact that a key algorithm or logic of the programs which are converted into the common intermediate language code is analyzed or to prevent the source code of programs from being modified, rebuilt and distributed without authorization.

### SUMMARY OF THE INVENTION

The main purpose of this embodiment is to provide a security method for a common intermediate language-based program by making a key algorithm or logic of common intermediate language code programs into a separate dynamic link library (DLL); encrypting the DLL; and causing the encrypted DDL to be used via a Plug-in.

According to one aspect of this embodiment, in a method for providing security for a user DLL (Dynamic Link Library) used in a platform which supports an application made of common intermediate language code and a plug-in made of native code, the method for providing security for the common intermediate language-based program comprises: a specific function call step of calling a specific function within the application which calls a specific module in a security logic DLL including one or more modules while the application is loaded into a main memory and be executed; a DLL request step of requesting the security logic DLL from a security module plug-in in which the security logic DLL is encrypted and stored; a DLL generation step of generating the security logic DLL by decrypting the encrypted DLL in the security module plug-in; a step of transmitting the security logic DLL to the specific function within the application; and a DLL module call step of calling the specific module included in the security logic DLL.

According to another aspect of this embodiment, in a method for providing security for a user DLL (dynamic link library) used in a platform which supports an application made of common intermediate language code and a plug-in made of native code, the method for providing security for a common intermediate language-based program comprises: a DLL generation step of generating a security logic DLL made of common intermediate language code by compiling a source code of the secure logic used in the application; an encrypted DLL generation step of generating an encrypted DLL by encrypting the security logic DLL; and a security module plug-in generation step of generating a security module plug-in including the encrypted DLL.

As described above, according to this embodiment, a key algorithm or logic in a program source code which is converted into a common intermediate language code is separated into a separate file; made into a DLL; and then encrypted and stored in the native code plug-in. During execution of the application, if a specific module included in the DLL is called, the plug-in decrypts the encrypted DLL to transmit it to the application. At this time, as the DLL included in the plug-in is encrypted, it is almost impossible to restore it to the original source code.

As a typical example, in a unity 3D engine, a game program is written in C # language and is converted into a common intermediate language code by compiling the game program. Unity 3D engine supports a plug-in made in such language that can generate the native code of the machine language code, such as C / C ++. DLL made in the C# language is compiled and encrypted and then stored in a plug- in made in C ++ language. Thereby DLL which contains a key algorithm and logic of the game programs can be safely secured.

In addition, it is possible to provide a variety of security functions by using a plug-in made of native code. For application files, plug-in files and essential files required for to execution of program, in case of extracting hash codes per file using the hash function and generating the hash registry including hash codes per file and then storing it within the plug-in, the integrity of the file can be verified by using the hash codes stored in the hash registry. If the file is found to be modified, the program ends without further execution.

In addition, in order to prevent the program from being analyzed statically or dynamically using tools such as debugger or prevent the program from being attacked by insertion of malicious code, an anti-debugging function can be included. Also, an anti-dump function can be included to prevent dumping the memory state of the process during execution. If the application includes an anti-debugging function, it is possible to prevent the application from being debugged by a debugging tool such as gdb. and it is possible to stop execution of the process itself by sensing the process characteristics which appear in a debugging state such that a further debugging may be prevented. If the application includes an anti-dump function, it is possible to block in advance any attempts to dump the execution memory state of application.

It is possible to provide innovative security methods such as the DLL encryption, the integrity verification via the hash check for each of files of the application, the anti-debugging, the anti-dump and the like by using the native code plug-in.

### BRIEF DESCRIPTION OF THE DRAWINGS

Figure 1 is a configuration view of the device for generating a plug-in which encrypts a DLL and provides a security function according to the embodiment.
Figure 2 is a flow chart of the process for generating a plug-in including a DLL according to the embodiment.
Figure 3 is a diagram illustrating the process for generating a plug-in according to the embodiment.
Figure 4 is a configuration view of a device for executing an application and a plug-in according to the embodiment.
Figure 5 is an illustrated view of a game program and a plug-in loaded into the main memory according to the embodiment.
Figure 6 is an illustrated view of the internal configuration of DLL including modules which requires security according to the embodiment.
Figure 7 is a flow chart of the process in which an application calls a module included in a DLL according to the embodiment.
Figure 8 is an illustrated view of the process in which a specific module in a DLL is called according to the embodiment.

### DESCRIPTION OF SPECIFIC EMBODIMENTS

Hereinafter, the present embodiments will be described in detail with reference to the accompanying drawings.

Embodiments of the invention relate to a common intermediate language code application, a DLL including a key algorithm or logic of an application and a plug-in including an encrypted DLL and providing a security function. The plug-in should be a native code made in C / C ++ such as Android's NDK(Native Development Kit) and XCode. If the plug-in is made in the language which creates a common intermediate language code, like C # and Java, the plug-in itself can be hacked and thus a security function which the plug-in provides can be disabled.

The following embodiments are directed to an application made in Unity-based C# language and a plug-in made in C/C# which supports a native code. However, the technical idea of the present invention should not be limited to this.

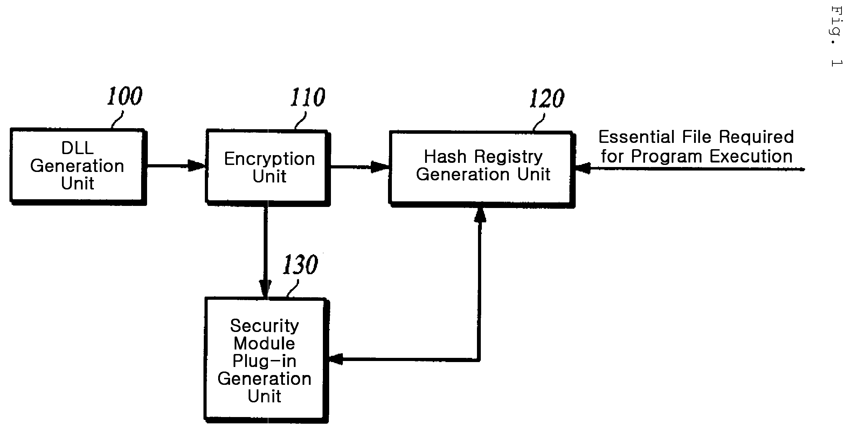

Figure 1 is a configuration view of the device for generating a plug-in which encrypts a DLL and provides a security function according to the embodiment.

By compiling a source code made after being separated from a source code of an application, a DLL generation unit 100 generates a DLL binary made of common intermediate language code and then transmits it to an encryption unit 110. The encryption unit 110 may encrypt the received DLL by using an encryption algorithm such as DES, AES and RSA and then transmit it to a security module plug-in generation unit 130 and a hash registry generation unit 120. The Hash registry generation unit 120 extracts hash codes per file by taking an essential file required for a program execution, a plug-in file and an application file, etc., as input of a hash function (MD5, SHA, Checksum, etc.), and generates a hash registry including the extracted hash codes per file. The essential files required for execution of the program in Unity-based applications includes, for example libmono.so, libunity.so MonoSecurity.dll and UnityEngine.dll and so on. The hash registry generation unit 120 transmits the hash registry to a security module plug-in generation unit 130. The security module plug-in generation unit 130 includes the received encrypted DLL and the hash registry into the plug-in and adds security functions such as anti-debugging and anti-dump functions to generate a security module plug-in.

On the other hand, the encryption unit 110, the hash registry generation unit 120 and the security module plug-in generation unit 130 do not need to be in the same device as the DLL generation unit. That is, if DLL generated in DLL generation unit 100 and essential files required for execution of the program are transmitted to a server, an encryption unit 110 of the server encrypts the received DLL and the hash registry generation unit 120 of the server extracts hash codes per file from application files, plug-in files and essential files required for execution of the program by using the hash function to generate the hash registry. The security module plug-in generation unit 130 of the server receives an encrypted DLL and the hash registry, includes it into the plug-in and adds security functions such as anti-debugging and anti-dump functions.

If the plug-in is generated in a personal computer for development, the personal computer for development is highly susceptible to be infected with malware code and vulnerable to outside attacks. However, since the server is relatively safer than PC and only the server necessary for the development needs to be enhanced in security, it is advantageous in terms of cost.

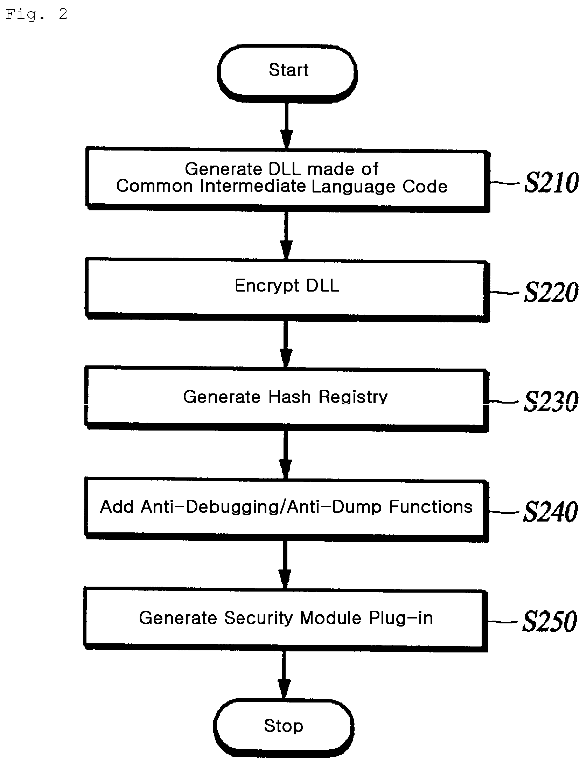

Figure 2 is a flow chart of the process for creating a plug-in according to the embodiment.

If the source code written in a language such as C # and Java is compiled and converted into a common intermediate language code, it is possible to restore the common intermediate language code to the original source code. In order to solve such security problem, a source code file is generated by separating a module including a key algorithm or logic from a source code as a separate file. A DLL made of common intermediate language code is generated by compiling the separated source code (S210). The common intermediate language code is in byte code form and thus may be easily analyzed. Thus, the DLL made of the common intermediate language code is encrypted by encryption algorithm (AES, RAS, etc.) (S220) and thereby it is prevented to analyze a key algorithm or logic of application.

When an application is executed, the file integrity can be verified by using a hash registry. In order to avoid modifying application files and essential files required for executing the application or modifying the plug-ins to disable security functions of the plug-ins, hash codes are extracted per file by using the hash function and the hash registry is generated (S230). By using a C/C# plug-in, it is possible to add any other further security functions. It is possible to include an anti-debugging function to prevent the program from being analyzed statically or dynamically by using tools such as debugger or to prevent the program from being attacked by inserting malicious code. Also, it is possible to include an anti-dump function to prevent dumping the memory state of process during execution (S240). Over the steps of the above, finally a security module plug-in file including an encrypted DLL, a hash registry, an anti-debugging function and an anti-dump function is generated (S260).

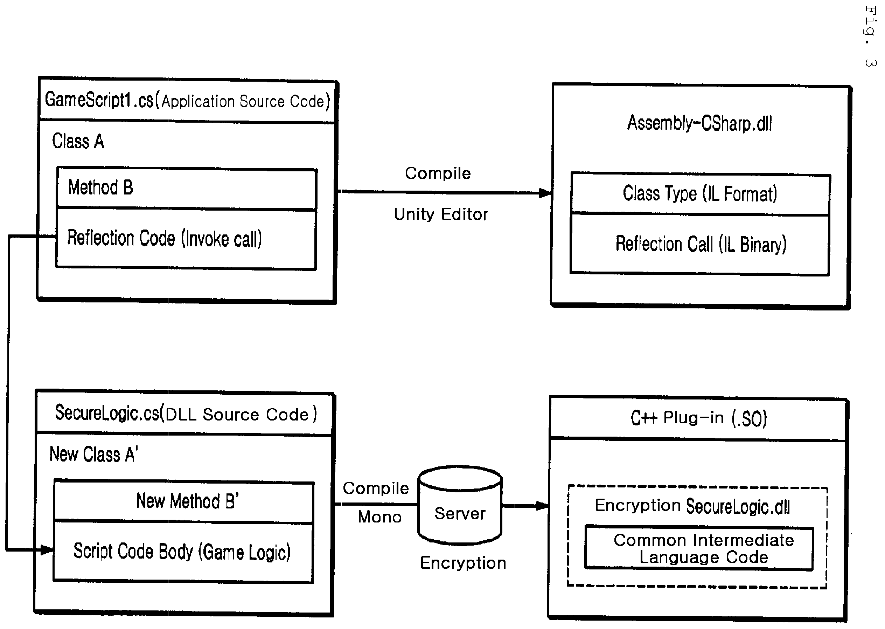

Figure 3 is an illustrated view showing the process for generating a plug-in according to the embodiment.

FIG. 3 shows a process for generating an application binary and a DLL by compiling a game program source code written in a Unity-based C# language and a source code written after being separated from the game program, respectively; encrypting the DLL; and generating a plug-in made in C++ including the encrypted DLL. GameScript1.cs which is a program source code of a game script and developed in C# language in unity platform includes Class A and Method B which is a member thereof, and a newly generated source code SecureLogic.cs, includes a New Method B' including a key algorithm or logic of the game program and a New class A' including the New Method B'. Assembly-CSharp.dll is generated by compiling in Unity Editor a GameScript1.cs which is a program source code of a game script. SecureLogic.dll is generated by compiling SecureLogic.cs which is a separated source code by using a Mono compiler and is transmitted to a server. The encryption unit 110 of the server encrypts SecureLogic.dll. A security module plug-in generation unit 130 of the server generates a plug-in made in C# including the encrypted SecureLogic.dll. Embodiment of Figure 3 does not include the hash registry generation unit 120 of FIG 1.

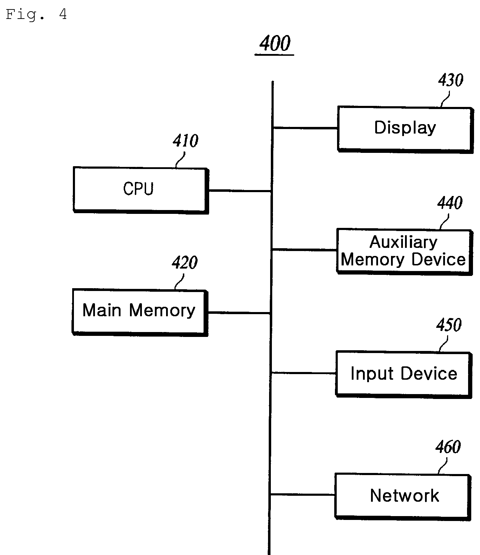

Figure 4 is a configuration view of a device for executing an application and a plug-in according to the embodiment.

Figure 4 is a configuration view of devices for executing a game program made of common intermediate language code and a plug-in made of native code containing a DLL. A game program and a plug-in are stored in an auxiliary memory device 440 and if the game program is executed CPU 410 loads the game program into a main memory 420 to execute it. The execution result of the game program is displayed on a display device 430. A new value may be inputted into the game program through an input device 450 and a network device 460. If a specific module included in a DLL is called during execution of the game, the plug-in is loaded into the main memory 420 and after a DLL decryption and a security function such as file integrity check are performed, the DLL is transmitted to the function which called the DLL.

Device 400 for executing a program made of common intermediate language code and a plug-in made of native code according to an embodiment of the present invention may be a user terminal such as a personal computer (PC), a notebook computer, a tablet, a personal digital assistant (PDA), a game console, a portable multimedia player (PMP), a PlayStation Portable (PSP), a wireless communication terminal, a smart phone, TV and a media player. The device 400 for executing a program made of common intermediate language code and a plug-in made of native code according to an embodiment of the present invention may be a server terminal such as an application server and a service server. The device 400 for executing a program made of common intermediate language code and a plug-in made of native code, respectively according to an embodiment of the present invention may refer to various devices provided with (i) a communication device such as a communication modem for performing communication with various devices or a wired/wireless communication network, (ii) a memory for storing data to execute the program, (iii) a microprocessor for performing computation and control by executing the program, and the like. In accordance with at least one embodiment, the memory may be a computer-readable recording/storage medium such as a Random Access Memory(RAM), a Read Only Memory(ROM), a flash memory, an optical disk, a magnetic disk, a solid state disk (SSD). In accordance with at least one embodiment, the microprocessor may be programmed to perform optionally at least one of operations and functions described herein. In accordance with at least one embodiment, the microprocessor may be implemented on the whole or on the part thereof using hardware such as an application specific integrated circuit (ASIC) of a particular configuration.

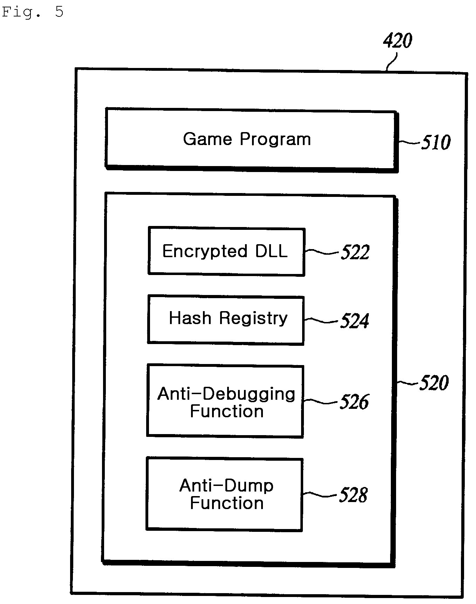

Figure 5 is an illustrated view of a game program and a plug-in loaded into the main memory according to the embodiment.

Figure 5 is an illustration of a game program 510 which is loaded into a main memory 420 to be executed and a plug-in 520 which is loaded into the main memory, wherein the plug-in includes a security function such as an encrypted DLL 522, a hash registry 524, an anti-debugging function 526 and an anti-dump function 528. If the game program is executed, a game program binary is loaded from an auxiliary memory device 440 into the main memory 420. During execution of the game program, the game program needs any one of modules included in the DLL and thus if requesting the DLL from the plug-in, the plug-in 520 is loaded into the main memory 420. The plug-in loaded into the main memory is made in a native code and thus it is less likely that a security function will be disabled due to modification. Even if the plug-in is modified and thus a security function thereof is disabled, modification can be found via integrity check of the file.

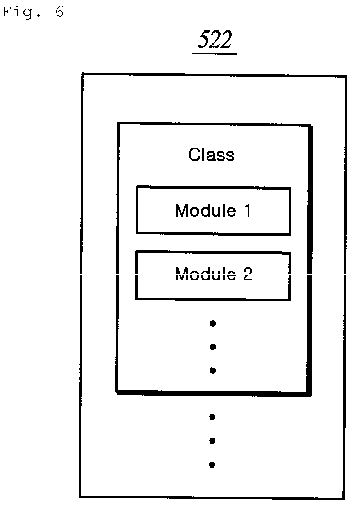

Figure 6 is an illustrated view of the internal configuration of DLL including modules in which requires security according to the embodiment.

Figure 6 is an illustration of the internal configuration of the encrypted DLL 522 included in the plug-in 520 of Figure 5. At least one module in which a key algorithm or logic of the application is included is separated and a class including this/these module/s is generated to be stored in the file. By compiling the file including the class by a compiler which can generate DLL like Unity's Mono, a DLL made of common intermediate language code is generated. Figure 6 is an illustration of the configuration including a class included in the DLL and a module 1, a module 2, ... which are a member of the class.

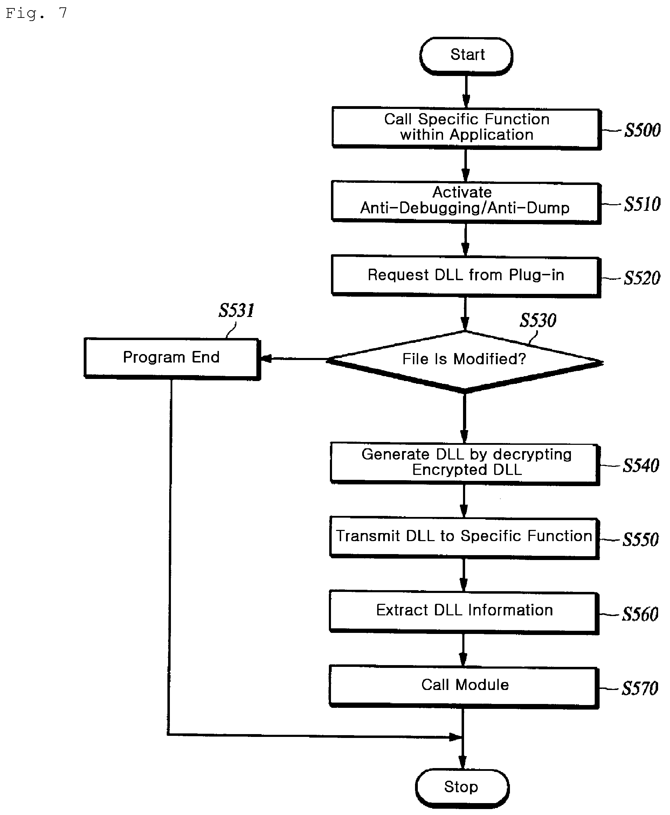

Figure 7 is a flow chart of the process in which the application calls a module included in a DLL according to the embodiment.

Figure 7 shows the process in which an application made of common intermediate language code requests a DLL from a plug-in and calls a specific module from the DLL including at least one module. While the application is loaded into the main memory and executed, any one of modules within the encrypted DLL is called from a specific function in the application. However, it is not possible to call the specific module within the DLL directly from the application, thus an indirect call should be performed by using a reflection.

Hereinafter, the process in which a specific module in a DLL is called will be described in detail. A specific function in the application with regard to any one specific module of modules included in the DLL is called (S500), and in order to call the specific function included in the DLL while the specific function is executed, the plug-in is loaded into the memory. At the time the plug-in is loaded, an anti-debugging function and an anti-dump function within the plug-in are activated (S510), the called specific function within the application transmits the name of the DLL to the plug-in and thereby requesting the DLL (S520). However, the DLL is encrypted inside the plug-in. Therefore, if the plug-in receives a DLL request, the plug-in is required to verify the integrity of the file about whether the file is modified (S530), to decrypt the DLL and to transmit the decrypted DLL (S540).

The anti-debugging function serves as preventing the act of analyzing a key algorithm or logic of the application or of changing the key variable value thereof with the debugger, and the anti-dump function serves as preventing dumping the memory state of the executing application. If the anti-debugging function is activated, applications can determine whether they are being debugged and if the anti-dump function is activated, applications can determine whether dumping the memory state is attempted or not. Therefore the execution can be stopped.

For the integrity check of the file, by taking, as input of the hash function, application files (Assembly-CSharp.dll), plug-in files (.so) made in C / C ++ such as Android NDK and XCode and essential files required for the execution of the program, for example Unity platform file (libmono.so , libunity.so, Mono.Security.dll, UnityEngine.dll, etc.), hash codes are extracted per file. It is determined whether or not the file is modified by confirming whether hash codes per file match any one of the hash codes of the hash registry included in the plug-in (S530). When even any one of files whose integrity check is completed is found to be modified, the application is ended (S531). Even if the plug-in is modified to disable the integrity check of files, the modification of files can be detected by the integrity check of the plug-in file. If the program is determined not to be modified in the file integrity checking process, the plug-in decrypts the DLL (S540).

Like this, by using a plug-in made in a native code, there can be provided an innovative security for an application made of common intermediate language code and a DLL used in application, e.g. a variety of security functions, such as encryption for protecting DLL, file integrity check, anti-debugging and anti-dump.

Of course, the implementation sequence of the anti-debugging and the anti-dump process, the file integrity check process and the DLL decryption process according to the embodiment of the present invention does not need to necessarily be conformed.

After the decryption step of a DLL, the plug-in transmits the DLL to a specific function within the application which requests the DLL (S550). The specific function within the application made in C# language loads the received DLL using Assembly Class of .NET Framework and then extracts DLL information (S560). Here, the assembly class is not necessarily limited to the C # language. If Assemby Class into which DLL is loaded is stored within the application, a module within the DLL can be called even if not requesting again DLL from the plug-in after the first use of DLL. A specific script function calls a specific module with a reflection method using a specific module information which is loaded into Assembly Class (S570).

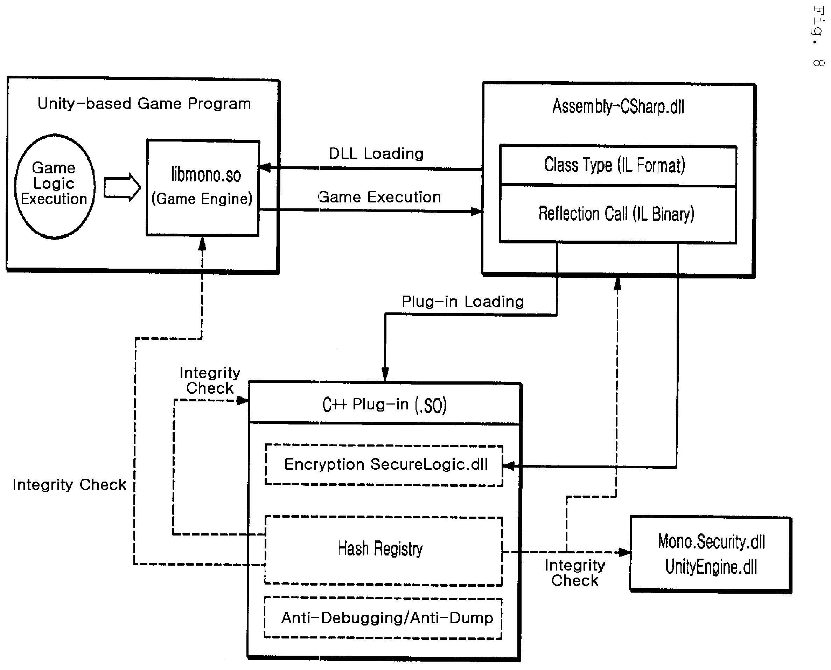

Figure 8 is an illustrated view of the process in which a specific module in a DLL is called according to the embodiment.

Hereinafter, Figure 8 will be described with reference to Figure 7. Figure 8 is an illustration of the process in which a game program made in C # language in Unity platform is executed.

If a game program made of common intermediate language code is executed, the instructions of the game program are executed by a game engine of Unity's libmono.so and, first, the game engine, libmono.so is executed by loading Class of the game program included in Assembly-CSharp.dll. If a specific module included in SecureLogic.dll including a key algorithm or logic of the game is called while Assembly-CSharp.dll is executed (S500), the game program activates the anti-debugging function and the anti-dump function within plug-in (S510) and requests SecureLogic.dll from the plug-in (S520). In order to verify the integrity of files, hash codes per file for essential files required for execution of application such as libmono.so, Mono.Security.dll, UnityEngine.dll, are extracted by Assembly-CSharp.dll, plug-in files (.so) and Unity platform files, using the hash function, and it is determined whether hash codes match any one of the hash codes of the hash registry including at least one hash code stored within the plug-in to verify the integrity of each file (S530). And the encrypted DLL within the plug-in is decrypted (S540) and then transmits it to a calling function within Assembly-CSharp.dll requesting SecureLogic.dll (S550).

The above description is simply to describe the technical idea of the embodiments by way of examples. Those skilled in the art of the embodiments may make various modifications, additions and substitutions, without departing from principles of this disclosure. Accordingly, the embodiments are intended for illustrating rather than for limiting the technical scope of this embodiment. The scope of the technical concept of the embodiments is not limited by the embodiments. The scope of the embodiment is to be interpreted by the following claims. All such modifications and variations are to be construed as being included within the scope of this embodiment.

## Claims

1. In a method for providing security for a user DLL (dynamic link library) used in a platform which supports an application made of common intermediate language code and a plug-in made of native code, the method for providing security for the common intermediate language-based program comprises:
a specific function call step of calling a specific function within the application which calls a specific module in a security logic DLL including one or more modules while the application is loaded into a main memory and be executed;
a DLL request step of requesting the security logic DLL from a security module plug-in in which the security logic DLL is encrypted and stored;
a DLL generation step of generating the security logic DLL by decrypting the encrypted DLL in the security module plug-in;
a step of transmitting the security logic DLL to the specific function within the application; and
a DLL module call step of calling the specific module included in the security logic DLL.

2. The method according to claim 1, wherein the DLL request step comprises transmitting the name of the security logic DLL to the security module plug-in by the specific function..

3. The method according to claim 1, wherein the DLL generation step further comprises an integrity checking step of verifying whether at least one of the application, the security module plug-in and essential files required for executing the application is modified.

4. The method according to claim 3, wherein the integrity checking step comprises:
a step of extracting hash codes per file for the security module plug-in, the application and the essential plug-in and DLL of the platform;
a modification determination step of confirming whether hash codes per file match any one of the hash codes of a hash registry including at least one hash code included in the security module plug-in, to determine whether modified or not; and
a step of ending the application if a result of modification is generated in the modification determination step.

5. The method according to claim 1, wherein the DLL generation step further comprises a step of activating an anti-debugging function for preventing the application from being analyzed using a debugger.

6. The method according to claim 1, wherein the DLL generation step further comprises a step of activating an anti-dump function for preventing dumping a memory state of the application.

7. The method according to claim 1, wherein the DLL module extraction step comprises a DLL information extraction step of extracting information of the specific module from the security logic DLL.

8. The method according to claim 7, wherein the DLL information extraction step comprises a step of loading DLL information using an assembly class.

9. The method according to claim 8, wherein the DLL information extraction step comprises a step of storing the object of the assembly class into the application

10. The method according to claim 8, wherein the DLL module extraction step comprises a step of calling the security module included in the security logic DLL using the DLL information loaded into the assembly class.

11. In a method for providing security for a user DLL (dynamic link library) used in a platform which supports an application made of common intermediate language code and a plug-in made of native code, the method for providing security for the common intermediate language-based program comprises:
a DLL generation step of generating a security logic DLL made of common intermediate language code by compiling a source code of the secure logic used in the application;
an encrypted DLL generation step of generating an encrypted DLL by encrypting the security logic DLL; and
a security module plug-in generation step of generating a security module plug-in including the encrypted DLL.

12. The method according to claim 11, wherein the security module plug-in generation step further comprises:
a step of generating hash codes per file in order to verify an integrity check of the application, the security module plug-in and essential files required for execution of the application;
a step of generating a hash registry including the hash codes generated per file; and
a step of storing the hash registry into the security module plug-in.

13. The method according to claim 12, wherein the hash code generation step further comprises: a step of extracting hash codes per file for the security module plug-in, a DLL including application and an essential plug-in and DLL of the platform.

14. In a device for providing security for a user DLL (Dynamic Link Library) used in a platform which supports an application made of common intermediate language code and a plug-in made of native code, the device for providing security for the common intermediate language-based program comprises:
a DLL generation unit of generating a security logic DLL made of common intermediate language code by compiling a source code of the secure logic used in the application;
an encryption unit which is connected to the DLL generation unit and generates an encrypted DLL by encrypting the security logic DLL; and
a security module plug-in generation unit which is connected to the encryption unit and generates a security module plug-in including the encrypted DLL.

15. The device according to claim 14, wherein the security module plug-in generation unit further comprises:
a hash code generation unit of generating hash codes per file in order to verify the integrity check of the application, the security module plug-in and essential files required for the execution of the application; and
a hash registry generation unit which is connected to the hash code generation unit and generates a hash registry by the hash codes generated per file.
